# EUROPÄISCHE PATENTSCHRIFT

(11) **EP 3 107 953 B1**
(45) Veröffentlichungstag und Bekanntmachung des Hinweises auf die Patenterteilung: **11.04.2018**
(21) Anmeldenummer: 15706192.0
(22) Anmeldetag: 16.02.2015
(51) Int. Cl.: C08J 3/12, B26B 7/00, C08J 3/14, C08G 75/20, C08G 75/23, F26B 3/08, F26B 5/14, B29B 13/06

(54) **VERFAHREN ZUR TROCKNUNG VON PARTIKULÄREN POLYMEREN**
METHOD FOR DRYING PARTICULATE POLYMERS
PROCÉDÉ DE SÉCHAGE DE POLYMÈRES PARTICULAIRES

(30) Priorität: 19.02.2014 EP 14155815
(43) Veröffentlichungstag der Anmeldung: 28.12.2016
(73) Patentinhaber: BASF SE, 67056 Ludwigshafen am Rhein (DE)
(72) Erfinder: ERBES, Jörg, 76137 Karlsruhe (DE); LANGE, Gerhard, 69198 Schriesheim (DE); KORTEKAMP, Tobias, 68159 Mannheim (DE); LINNER, Bernhard, 67240 Bobenheim-Roxheim (DE); SCHNEIDER, Cecile, 67227 Frankenthal (DE); ULZHÖFER, Angela, 67065 Ludwigshafen (DE); HEINZ, Robert, 67067 Ludwigshafen (DE); MÜLLER, Michael Klemens, 67454 Hassloch (DE)
(74) Vertreter: BASF IP Association
(86) Internationale Anmeldenummer: PCT/EP2015/053195
(87) Internationale Veröffentlichungsnummer: WO 2015/124521

(56) Entgegenhaltungen:
- EP-A2- 0 003 120
- WO-A1-2009/065891
- WO-A1-2014/023826
- DD-A1- 251 754
- DE-A1- 19 849 499
- JP-A- 2010 222 506
- US-A- 4 065 426
- US-A- 4 213 888
- US-A1- 2013 253 080

## Beschreibung

Die vorliegende Erfindung betrifft ein Verfahren zur Trocknung von partikulären Polymeren sowie ein Verfahren zur Aufarbeitung von partikulären Polymeren.

Gattungsgemäße Verfahren sind aus dem Stand der Technik prinzipiell bekannt. Hierbei werden Nebenprodukte und Verunreinigungen aus frisch hergestellten partikulären Polymeren mittels Extraktionsverfahren entfernt oder zumindest deren Gehalt deutlich verringert. Beispiele hierfür sind Fest-Flüssig-Extraktionsapparate, die nach dem Kreuz-Gegenstrom-Prinzip arbeiten. Hierbei wird das partikuläre Polymer in kreisförmig angeordneten Kammern taktweise im Uhrzeigersinn bewegt und die Schüttung aus dem partikulären Polymer fortwährend mit der Extraktflüssigkeit beregnet. Ziel ist es, Nebenprodukte, Verunreinigungen und Lösungsmittel aus der Herstellung der partikulären Polymere zu entfernen, bzw. gegen leichter zu entfernende Lösungsmittel wie Wasser auszutauschen. Das verbleibende Wasser wird in herkömmlichen thermischen Trocknungsvorrichtungen auf einen vorbestimmten Restgehalt entfernt.

Nachteilig an den Verfahren des Standes der Technik sind insbesondere die hohen Energiekosten, die beim Betrieb der thermischen Trocknungsvorrichtungen entstehen. Vor allem eine nahezu vollständige Trocknung von partikulären Polymeren wird nur über energieintensive thermische Trocknungsvorrichtungen wie Wirbelschichttrockner erreicht.

Eine Aufgabe der vorliegenden Erfindung ist es daher, ein verbessertes Verfahren zur Trocknung von partikulären Polymeren anzugeben, das weniger energieintensiv ist und dabei vergleichbare oder bessere Trocknungsergebnisse erzielt.

Diese vorstehend genannte Aufgabe wird durch ein Verfahren zur Trocknung von partikulären Polymeren gelöst, umfassend die Schritte
a) Vorlegen eines partikulären Polymers, das 60 Gew.-% bis 90 Gew.-% eines Lösungsmittels (L1), bezogen auf das Gesamtgewicht von partikulärem Polymer und Lösungsmittel (L1), enthält,
b) mechanische Vortrocknung des partikulären Polymers auf 20 Gew.-% bis 50 Gew.-% des Lösungsmittels (L1), bezogen auf das Gesamtgewicht von partikulärem Polymer und Lösungsmittel (L1), wobei die mechanische Vortrocknung in Schritt b) mit einer Walzenpresse durchgeführt wird, und
c) Endtrocknung des partikulären Polymers auf 0 Gew.-% bis 15 Gew.-% des Lösungsmittels (L1), bezogen auf das Gesamtgewicht von partikulärem Polymer und Lösungsmittel (L1), wobei das partikuläre Polymer ein Polymer ist, das Wiederholungseinheiten der Formeln I, II und/oder III enthält

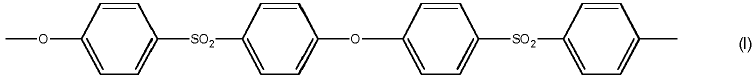

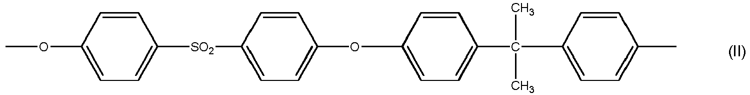

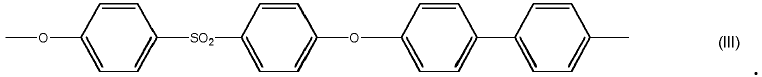

In einem zweiten Aspekt der vorliegenden Erfindung wird die vorstehend genannte Aufgabe durch Verfahren zur Aufarbeitung von partikulären Polymeren gelöst, umfassend die Schritte:
i) Bereitstellen einer Polymerlösung, die das Polymer und ein erstes organisches Lösungsmittel (L2) enthält,
ii) Zertropfen der Polymerlösung in ein Fällbad, das ein zweites organisches Lösungsmittel (L3) und Wasser enthält, unter Erhalt des partikulären Polymers durch Ausfällen,
iii) Abtrennen des ausgefällten partikulären Polymers von dem Fällbad,
iv) Extrahieren von Resten des ersten und/oder zweiten organischen Lösungsmittels (L2; L3) aus dem partikulären Polymer mit einem Extrahiermittel,
v) Trocknen des partikulären Polymers mit dem Verfahren nach einem der Ansprüche 1 bis 6 und
vi) gegebenenfalls Konfektionieren des partikulären Polymers.

Die vorliegende Erfindung hat den wesentlichen Vorteil, dass die Energiekosten für die Trocknung partikulärer Polymere um mehr als 50 % verringert werden können. Gleichzeitig können auch die notwendigen Investitionen in die Anlagentechnik mehr als halbiert werden.

Im Folgenden wird die vorliegende Erfindung im Detail beschrieben.

Der erste Aspekt der vorliegenden Erfindung betrifft ein Verfahren zur Trocknung von partikulären Polymeren. Das Verfahren umfasst zunächst einen Schritt a) Vorlegen eines partikulären Polymers, das 60 Gew.-% bis 90 Gew.-% eines Lösungsmittels (L1), bezogen auf das Gesamtgewicht von partikulärem Polymer und Lösungsmittel (L1), enthält. In einen Schritt b) erfolgt eine mechanische Vortrocknung des partikulären Polymers auf 20 Gew.-% bis 50 Gew.-% des Lösungsmittels (L1), bezogen auf das Gesamtgewicht von partikulärem Polymer und Lösungsmittel (L1). In einem Schritt c) wird eine Endtrockung des partikulären Polymers auf 0 Gew.-% bis 15 Gew.-% des Lösungsmittels (L1), bezogen auf das Gesamtgewicht von partikulärem Polymer und Lösungsmittel (L1), vorgenommen.

Das erfindungsgemäße Verfahren weist den Vorteil auf, dass die Energiekosten für die Trocknung partikulärer Polymere um mehr als 50 % verringert werden können, während die erhaltenen Produkte zumindest die gleiche Qualität zeigen wie vergleichbare Produkte, die aus Trocknungsverfahren gemäß dem Stand der Technik erhalten werden. Gleichzeitig können auch die notwendigen Investitionen in die Anlagentechnik mehr als halbiert werden.

Unter "partikulären Polymeren" werden im Wesentlichen alle Polymere verstanden, die nicht als Lösung oder in flüssigem Zustand vorliegen, sondern deren Teilchen diskret unterscheidbar sind. Dabei können die Polymerteilchen sowohl fein dispergiert als auch agglomeriert vorliegen. Typische Partikelgrößen liegen im Bereich von 0,5 bis 7 mm.

Der Begriff "Trocknung" bezieht sich auf das Entfernen von flüssigen Lösungsmitteln (L1), die in dem partikulären Polymer vorhanden oder darin eingeschlossen sind.

Das partikuläre Polymer weist im Allgemeinen offene Poren auf, die das Lösungsmittel (L1) enthalten. In den Verfahrensschritten a), b) und c) wird das Lösungsmittel (L1) aus diesen Poren entfernt.

Die Endtrocknung des partikulären Polymers kann bis zur vollständigen Entfernung des Lösungsmittels (L1) im Rahmen der Nachweisgrenze durchgeführt werden, das heißt auf 0 Gew.-%, bezogen auf das Gesamtgewicht von Polymer und Lösungsmittel (L1).

Erfindungsgemäß bevorzugt ist die Endtrocknung des partikulären Polymers in Verfahrensschritt c) auf 0 bis 10 Gew.-%, bevorzugt auf 0 bis 5 Gew.-%, besonders bevorzugt auf 0 bis 2 Gew.-% und insbesondere auf 0 bis 1 Gew.-% des Lösungsmittels (L1), bezogen auf das Gesamtgewicht von partikulärem Polymer und Lösungsmittel (L1).

Es kann jedoch technisch sinnvoll sein, geringe Restgehalte an Lösungsmitteln (L1) im oder am partikulären Polymer zu belassen, da eine vollständige Trocknung keinen technischen Effekt mehr zeigt, sondern lediglich die Energiekosten steigert. Es ist daher im Rahmen der vorliegenden Erfindung möglich, die Endtrocknung des partikulären Polymers auf 0,01 Gew.-% bis 15 Gew.-%, bevorzugt auf 0,01 Gew.-% bis 5 Gew.-%, besonders bevorzugt auf 0,01 Gew.-% bis 2 Gew.-% und insbesondere auf 0,01 bis 1 Gew.-% des Lösungsmittel (L1) durchzuführen, jeweils bezogen auf das Gesamtgewicht von partikulärem Polymer und Lösungsmittel (L1).

Obwohl mit dem erfindungsgemäßen Verfahren eine zumindest gleich gute Trocknung von partikulären Polymeren wie im Stand der Technik erreicht wird, wird durch die Kombination der Verfahrensschritte a), b) und c) eine Verringerung der aufzuwendenden Energie um mindestens 50 % erreicht. Bevorzugt beträgt die Verringerung der Energie 70 %, insbesondere bevorzugt mindestens 80 %.

In einer vorteilhaften Weiterbildung der Erfindung wird die mechanische Vortrocknung in Schritt b) mit einer Walzenpresse - auch als Kalander bezeichnet - durchgeführt. Dabei beträgt der Walzendurchmesser 200 mm bis 400 mm bei einer Arbeitsbreite von 100 mm bis 1200 mm. Der Pressdruck liegt zwischen 0,5 t/cm Walzenlänge und 5 t/cm Walzenlänge. Hierdurch wird es in vorteilhafter Weise möglich, die mechanische Vortrocknung des partikulären Polymers in Verfahrensschritt b) auf 20 Gew.-% bis 50 Gew.-% an Lösungsmittel (L1) zu verringern, bezogen auf das Gesamtgewicht von partikulärem Polymer und Lösungsmittel (L1).

Vorteilhafterweise wird die Endtrocknung in Schritt c) des erfindungsgemäßen Verfahrens mit einem Wirbelschichttrockner durchgeführt. Mit dem Wirbelschichttrockner kann die Endtrocknung des partikulären Polymers auf nahezu vollständige Abwesenheit des Lösungsmittels (L1) verringert werden. Obwohl der Wirbelschichttrockner eine energieintensive Vorrichtung ist, stellt er eine sehr effiziente Möglichkeit zum Erreichen des gewünschten Trocknungsgrades dar.

Bei dem Lösungsmittel (L1) kann es sich um genau ein Lösungsmittel oder um eine Mischung von zwei oder mehreren Lösungsmitteln handeln. Bevorzugt enthält das Lösungsmittel (L1) mindestens 80 Gew.-%, besonders bevorzugt mindestens 90 Gew.-%, mehr bevorzugt mindestens 95 Gew.-% und insbesondere bevorzugt mindestens 99 Gew.-%, bezogen auf das Gesamtgewicht des Lösungsmittels (L1).

Für das Trocknungsverfahren hat es sich als vorteilhaft herausgestellt, wenn das Lösungsmittel (L1) Wasser ist. Wasser hat den Vorteil, dass es sich im Wesentlichen gefahrlos handhaben und im erfindungsgemäßen Verfahren leicht entfernen lässt. So muss die Vorrichtung für die mechanische Vortrocknung in Schritt b) nicht gekapselt werden, um ein Austreten von Wasser als Lösungsmittel (L1) zu verhindern. Wasser lässt sich zudem durch die mechanische Vortrocknung in Schritt b) gut auf den gewünschten Lösungsmittelgehalt verringern und in der Endtrocknung effizient entfernen.

In einer bevorzugten Ausführungsform der Erfindung liegt das partikuläre Polymer in Schritt a) in Form von Partikeln mit einem Durchmesser von 0,5 bis 7 mm vor. Besonders bevorzugt liegt der Durchmesser der Polymerkugeln zwischen 2 und 6 mm. Bei kleineren Partikelgrößen müsste für die mechanische Vortrocknung (Verfahrensschritt b)) deutlich mehr Kraft und damit mehr Energie aufgewendet werden. Wenn andererseits die Partikelgröße größer ist, kann die mechanische Vortrocknung nicht mehr effizient durchgeführt werden.

Es hat sich für den Schritt der Endtrocknung als vorteilhaft erwiesen, wenn das mechanisch vorgetrocknete partikuläre Polymer nach Schritt b) und vor Schritt c) zerkleinert wird. Bei der mechanischen Vortrocknung (Verfahrensschritt b)) des partikulären Polymers wird dieses stark kompaktiert, so dass es in großen Agglomeraten oder Stücken einer Art Pressling vorliegt. Um den Wirkungsgrad der in Schritt c) vorgesehenen Endtrocknung zu erhöhen, werden diese Agglomerate oder Stücke zerkleinert. Die Zerkleinerung wird insbesondere bis zur nahezu ursprünglichen Teilchengröße des partikulären Polymers durchgeführt.

In einer bevorzugten Ausführungsform der Erfindung liegt das partikuläre Polymer nach Schritt c) in Form von Partikeln mit einem Durchmesser von 0,5 bis 7 mm vor. Besonders bevorzugt liegt der Durchmesser der Polymerkugeln zwischen 2 und 6 mm. Bei kleineren Partikelgrößen müsste für die mechanische Vortrocknung (Verfahrensschritt b)) deutlich mehr Kraft und damit mehr Energie aufgewendet werden. Wenn andererseits die Partikelgröße größer ist, kann die mechanische Vortrocknung (Verfahrensschritt b)) nicht mehr effizient durchgeführt werden.

Die Partikelgröße des partikulären Polymers wird bestimmt durch eine Siebanalyse nach DIN 66165.

Das partikuläre Polymer ist ein Polymer, das Wiederholungseinheiten der Formeln I, II und/oder III enthält

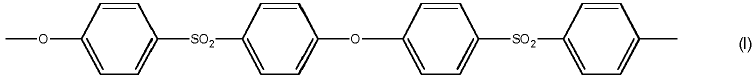

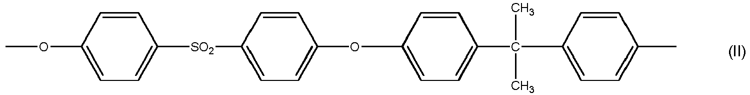

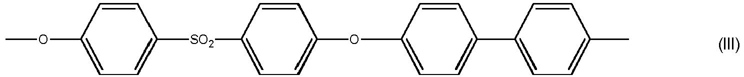

Bevorzugt sind Polymere, die aus den Wiederholungseinheiten der Formeln I, II und/oder III bestehen. Diese Polymere werden als Polyethersulfon (PESU) (I), Polysulfon (PSU) (II) und Polyphenylenethersulfon (PPSU) (III) bezeichnet und sind erfindungsgemäß besonders bevorzugt. Sie werden von BASF SE unter den Handelsnamen Ultrason® E (I), Ultrason® S (II) und Ultrason® P (III) vertrieben.

Diese Polymere sind aufgrund ihrer Hochtemperaturstabilität mit ausgewogenen Eigenschaftskombinationen einerseits und ihrem als günstig zu bewertendem Preis-Leistungs-Verhältnis andererseits als partikuläres Polymer bevorzugt.

In einem zweiten Aspekt der vorliegenden Erfindung wird ein Verfahren zur Aufarbeitung von partikulären Polymeren, umfassend die Schritte:
i) Bereitstellen einer Polymerlösung, die das Polymer und ein erstes organisches Lösungsmittel (L2) enthält,
ii) Zertropfen der Polymerlösung in ein Fällbad, das ein zweites organisches Lösungsmittel (L3) und Wasser enthält, unter Erhalt des partikulären Polymers durch Ausfällen,
iii) Abtrennen des ausgefällten partikulären Polymers von dem Fällbad,
iv) Extrahieren von Resten des ersten und/oder zweiten organischen Lösungsmittels (L2; L3) aus dem partikulären Polymers mit einem Extrahiermittel,
v) Trocknen des partikulären Polymers mit dem Verfahren nach einem der Ansprüche 1 bis 6 und
vi) gegebenenfalls Konfektionieren des partikulären Polymers.

Das Verfahren nach dem zweiten Aspekt der vorliegenden Erfindung weist den Vorteil auf, dass erstmals ein effizientes, insbesondere energieeffizientes Aufarbeitungsverfahren von der Polymerlösung bis zum fertig konfektionierten partikulären Polymer bereitgestellt wird. Die Energieeinsparungen dieses Verfahrens liegen bei 50 % und mehr, verglichen mit herkömmlichen Aufarbeitungsverfahren, in denen insbesondere nach der Herstellung und dem Extrahieren des Polymers herkömmliche Trocknungsverfahren angewendet werden.

Es ist bevorzugt, in dem erfindungsgemäßen Aufarbeitungsverfahren N-Methylpyrrolidon als erstes und/oder zweites organisches Lösungsmittel (L2; L3) zu verwenden.

Als Extrahiermittel wird in Verfahrensschritt iv) bevorzugt das Lösungsmittel (L1) eingesetzt, so dass nach Verfahrensschritt iv) ein partikuläres Polymer erhalten wird, das bei 60 bis 90 Gew.-% des Lösungsmittels (L1) enthält, bezogen auf das Gesamtgewicht aus partikulärem Polymer und Lösungsmittel (L1).

Es ist ferner bevorzugt, dass das partikuläre Polymer ein Polyethersulfon ist.

Weitere Ziele, Merkmale, Vorteile und Anwendungsmöglichkeiten ergeben sich aus der nachfolgenden Beschreibung von Ausführungsbeispielen der Erfindung anhand der Figur. Dabei bilden alle beschriebenen und/oder bildlich dargestellten Merkmale für sich oder in beliebiger Kombination den Gegenstand der Erfindung, auch unabhängig von ihrer Zusammenfassung in den Ansprüchen oder deren Rückbeziehungen.

### Es zeigt:

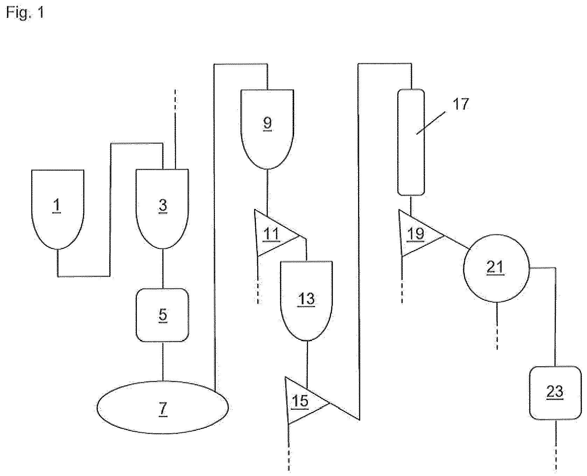

- Figur 1: eine schematische Darstellung des erfindungsgemäßen Aufarbeitungsverfahrens mit dem erfindungsgemäßen Verfahren zur Trocknung von partikulären Polymeren.

Im Folgenden wird die vorliegende Erfindung anhand eines konkreten Ausführungsbeispiels erläutert, in dem ein Polyethersulfon hergestellt und aufgearbeitet wird. Die vorliegende Erfindung ist jedoch auch für andere Arten von partikulären Polymeren geeignet.

Nach dem Stand der Technik enthalten Polyethersulfon-Polymergranulate nicht verdampfbare Verunreinigungen und Mengen von 200 ppm bis 500 ppm Kaliumchlorid. Dies führt bei der Herstellung von Fertigteilen zu mangelnder Transparenz und Verfärbungen. Um diese Mängel zu beheben, wurde ein Fällverfahren für Polyethersulfone entwickelt, mit dem die Polymerlösung zunächst in eine feste partikuläre Form gebracht wird, in der mittels einer Fest-Flüssig-Extraktion die Verunreinigungen und Nebenprodukte entfernt werden können. Hierdurch ist es möglich, die Produkteigenschaften in Bezug auf Transparenz, Eigenfarbe, Langzeitverhalten bei Zug-Biege-Beanspruchung und Verarbeitungsstabilität bei Spritzgussverarbeitung bis 400 °C deutlich zu verbessern. Dabei werden die durch gesteuerten Strahlzerfall (Zertropfung) erzeugten und in wässrigen N-Methylpyrrolidon-Lösungen ausgefällten Partikel im Wesentlichen mit Wasser extrahiert.

Bei der Aufarbeitung trat das Problem auf, dass das frisch gefällte Polyethersulfon-Polymer noch ca. 160 % bis 220 % N-Methylpyrrolidon / 100 % Polymer, bzw. 100 ppm bis 1000 ppm Kaliumchlorid / 100 % Polymer enthielt. Die Polyethersulfon-Polymerpartikel waren bei diesen Gehalten an N-Methylpyrrolidon nicht stabil und damit nicht lagerfähig. Es hat sich gezeigt, dass die Teilchen schon bei Temperaturen von 80 °C bis 90 °C zerflossen. Aus diesem Grund werden erfindungsgemäß unmittelbar nach der Fällung ca. 75 % bis 80 % des N-Methylpyrrolidons und Kaliumchlorids entfernt.

Da die gefällten und extrahierten Polyethersulfon-Partikel zu ca. 25 % aus polymerem Feststoff und zu ca. 75 % aus Wasser (L1) bestehen, ist die Entfernung des gesamten Wassers (L1) mit den bekannten Vorgehensweisen, beispielsweise in einem Wirbelschichttrockner, mit einem sehr hohen energetischen Aufwand verbunden. Erfindungsgemäß wird daher vor der Endtrocknung durch mechanisches Zerdrücken (Verfahrensschritt b)) und Abpressen der Polyethersulfon-Polymerteilchen ein großer Teil des Wassers (L1) entfernt.

Figur 1 zeigt ein Schema der Nassaufarbeitung von Polyethersulfonen. Eine aus dem Polykondensationsreaktor 1 erhaltene Polyethersulfonlösung (18% in N-Methylpyrrolidon) wird in einem Behälter 3 vorgelegt und mit einem geeigneten Lösungsmittel (zum Beispiel N-Methylpyrrolidon) verdünnt. Diese Lösung wird über eine Filtervorrichtung 5, in der beispielsweise Salze aus dem Herstellungsverfahren abgetrennt werden, in einen Vorratsbehälter 7 geführt. Von dort wird die Lösung zum Kopf eines Behälters 9 geführt, wo die Lösung mit Hilfe einer Anordnung paralleler Kapillaren in einer Edelstahlplatte zu Strahlen geformt wird. Diese Strahlen zerfallen nach einer bestimmten Fallhöhe zu Tropfen (sog. Zertropfung), welche im unteren Teil der Behälters 9 in ein Fällbad fallen (zum Beispiel NMP/H₂O). Das Polyethersulfon-Polymer wird dort ausgefällt und die nach einer vorbestimmten Verweilzeit ausgehärteten Polymerkugeln werden über eine Syphonleitung einem Sieb 11, insbesondere einem Rüttelsieb, zugeführt.

Das ausgehärtete Polyethersulfon-Polymer wird dort von der Fälllbadflüssigkeit abgetrennt und in den Behälter 13 überführt. Die Fällbadflüssigkeit kann über eine nicht gezeigte Verbindungsleitung in den Behälter 9 zurückgeführt werden. Im Behälter 13 findet eine Vorextraktion statt, beispielsweise werden die Polymerteilchen mit einer Verweilzeit von ca. einer Stunde bei 85 °C mit einer 15-prozentigen wässrigen N-Methylpyrrolidon-Lösung behandelt. Vor diesem Schritt kann das Polyethersulfon-Polymer neben nicht verdampfbaren Verunreinigungen 200 ppm bis 500 ppm Kaliumchlorid, höherkonzentriertes N-Methylpyrrolidon sowie farbgebende Substanzen aus Nebenprodukten enthalten.

Nach der Vorextraktion werden die Polyethersulfon-Polymerteilchen einem weiteren Sieb 15, ebenfalls bevorzugt ein Rüttelsieb, zugeführt und von der Extraktionslösung getrennt. In einer Vorrichtung zur Feinextraktion 17, beispielsweise einem Karusselextraktor, werden die Polyethersulfon-Polymerteilchen weiter gereinigt. Die im Sieb 15 abgetrennte Flüssigkeit kann ebenfalls über eine nicht gezeigte Verbindungsleitung in den Behälter 13 zurückgeführt werden. In dem Feinextraktor 17 wird vorzugsweise Wasser als Extraktionsmittel verwendet. Die in diesem Schritt erhaltenen Polyethersulfon-Polymerteilchen werden über ein weiteres Sieb 19 vom Wasser abgetrennt.

Die Polyethersulfon-Polymerteilchen enthalten nach diesem Schritt im Wesentlichen kein Kaliumchlorid und kein N-Methylpyrrolidon mehr. Die so erhaltenen Teilchen bestehen zu ca. 25 % aus polymerem Feststoff und zu ca. 75 % aus Wasser (L1). Sie werden im nachfolgenden Schritt einer Walzenpresse 21 zugeführt, in welcher das Extraktionsmittel, im vorliegenden Beispiel Wasser (L1), aus dem Polymer ausgepresst wird.

In einer konkreten Ausführungsform wurde eine Walzenpresse der Firma Alexanderwerk verwendet, in der Feststoffgehalte zwischen 50 % und 60 % bei Durchsätzen von 60 kg pro Stunde erreicht wurden. Die Walzenbreite betrug 330 mm bei einem Walzendurchmesser von 300 mm.

Nach Verlassen der Walzenpresse fällt das Polyethersulfonpolymer als Filterkuchen von fladenförmigen Presslingen (sog. Schülpen) an. Vor der Endtrocknung werden diese fladenförmigen Presslinge in die ursprünglichen Einzelpartikel wieder aufgeteilt, was in der vorliegenden Ausführungsform mit einem in Figur 1 nicht dargestellten Reibfeingranulator erreicht wird.

Abschließend wird das vorgetrocknete Polyethersulfon-Polymer aus der Walzenpresse 21 in einem Wirbelschichttrockner 23 getrocknet.

Im Zuge der Erfindung wurde der Einfluss der Vortrocknung auf die Kosten der abschließenden Wirbelschichttrocknung berechnet. Dabei wurden die Investitions- und Energiekosten (Dampf und Strom) in Abhängigkeit von dem Eingangsgehalt an Lösungsmittel (20 Gew.-% bis 75 Gew.-%) für die Wirbelschichttrocknung berechnet. Die nachstehende Tabelle 1 führt die wichtigsten Parameter auf.

**Tabelle 1**

| Anlage | Eingangsfeuchte (Gew.-%) | Investition (Mio €) | Energie (T €/a) |
|---|---|---|---|
| ohne Vorentfeuchtung (Stand der Technik) | 75 | 3,5 | 250 |
| mit Vorentfeuchtung (gemäß der Erfindung) | 45 | 1,4 | 80 |
| mit verbesserter Vorentfeuchtung (gemäß der Erfindung) | 30 | 0,8 | 40 |

Im Vergleich zum erfindungsgemäßen Verfahren sind in den herkömmlichen Verfahren ohne eine mechanische Vortrocknung die Investitionskosten für eine Wirbelschichtanlage mehr als verdoppelt und die Energiekosten sogar verdreifacht.

### Bezugszeichenliste

- 1: Polykondensationsreaktor
- 3: Behälter (Verdünnung)
- 5: Filtervorrichtung
- 7: Vorratsbehälter
- 9: Behälter (Zertropfung)
- 11: Sieb
- 13: Behälter (Vorextraktion)
- 15: Sieb
- 17: Feinextraktion
- 19: Sieb
- 21: Walzenpresse
- 23: Wirbelschichttrockner

## Patentansprüche

1. Verfahren zur Trocknung von partikulären Polymeren, umfassend die Schritte:
a) Vorlegen eines partikulären Polymers, das 60 Gew.-% bis 90 Gew.-% eines Lösungsmittels (L1), bezogen auf das Gesamtgewicht von partikulärem Polymer und Lösungsmittel (L1), enthält,
b) mechanische Vortrocknung des partikulären Polymers auf 20 Gew.-% bis 50 Gew.-% des Lösungsmittels (L1), bezogen auf das Gesamtgewicht von partikulärem Polymer und Lösungsmittel (L1), wobei die mechanische Vortrocknung in Schritt b) mit einer Walzenpresse durchgeführt wird, und
c) Endtrocknung des partikulären Polymers auf 0 Gew.-% bis 15 Gew.-% des Lösungsmittels (L1), bezogen auf das Gesamtgewicht von partikulärem Polymer und Lösungsmittel (L1), wobei das partikuläre Polymer ein Polymer ist, das Wiederholungseinheiten der Formeln I, II und/oder III enthält

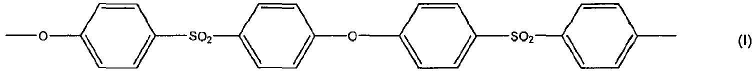

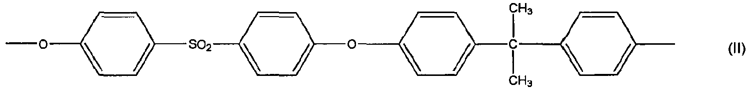

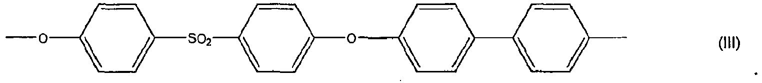

2. Verfahren nach Anspruch 1, wobei die Endtrockung in Schritt c) mit einem Wirbelschichttrockner durchgeführt wird.

3. Verfahren nach einem der Ansprüche 1 oder 2, wobei das Lösungsmittel (L1) Wasser ist.

4. Verfahren nach einem der Ansprüche 1 bis 3, wobei das partikuläre Polymer in Schritt a) eine Partikelgröße von 0,5 mm bis 7 mm aufweist.

5. Verfahren nach einem der Ansprüche 1 bis 4, wobei das mechanisch vorgetrocknete partikuläre Polymer nach Schritt b) und vor Schritt c) zerkleinert wird.

6. Verfahren nach einem der Ansprüche 1 bis 5, wobei das partikuläre Polymer nach Schritt c) eine Partikelgröße von 0,5 mm bis 7 mm aufweist.

7. Verfahren zur Aufarbeitung von partikulären Polymeren, umfassend die Schritte:
i) Bereitstellen einer Polymerlösung, die das Polymer und ein erstes organisches Lösungsmittel (L2) enthält,
ii) Zertropfen der Polymerlösung in ein Fällbad, das ein zweites organisches Lösungsmittel (L3) und Wasser enthält, unter Erhalt des partikulären Polymers durch Ausfällen,
iii) Abtrennen des ausgefällten partikulären Polymers von dem Fällbad,
iv) Extrahieren von Resten des ersten und/oder zweiten organischen Lösungsmittels (L2; L3) aus dem partikulären Polymers mit einem Extrahiermittel,
v) Trocknen des partikulären Polymers mit dem Verfahren nach einem der Ansprüche 1 bis 6 und
vi) gegebenenfalls Konfektionieren des partikulären Polymers.

8. Verfahren nach Anspruch 7, wobei das erste und/oder zweite organische Lösungsmittel (L2; L3) N-Methylpyrrolidon ist.

9. Verfahren nach einem der Ansprüche 1 bis 8, wobei das partikuläre Polymer ein Polyethersulfon ist.

## Claims

1. A process for drying particulate polymers, comprising the steps of:
a) providing a particulate polymer comprising from 60 wt% to 90 wt% of a solvent (S1) based on the total weight of particulate polymer and solvent (S1),
b) mechanically predrying the particulate polymer to a content of the solvent (S1) of from 20 wt% to 50 wt% based on the total weight of particulate polymer and solvent (S1), wherein the mechanical predrying in step b) is carried out with a roller press, and
c) end-drying the particulate polymer to a content of the solvent (S1) of from 0 wt% to 15 wt% based on the total weight of particulate polymer and solvent (S1), wherein the particulate polymer is a polymer comprising repeating units of formulae I, II and/or III

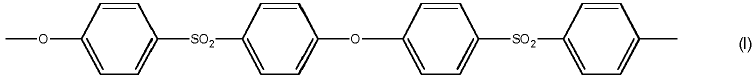

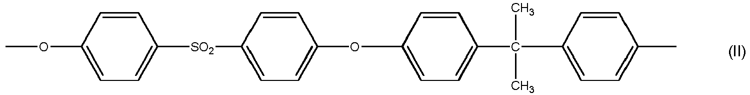

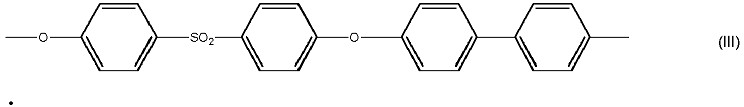

2. The process according to claim 1, wherein the end-drying in step c) is carried out with a fluidized bed dryer.

3. The process according to either of claims 1 and 2, wherein the solvent (S1) is water.

4. The process according to any of claims 1 to 3, wherein the particulate polymer has a particle size of from 0.5 mm to 7 mm in step a).

5. The process according to any of claims 1 to 4, wherein the mechanically predried particulate polymer is comminuted after step b) and before step c).

6. The process according to any of claims 1 to 5, wherein the particulate polymer has a particle size of from 0.5 mm to 7 mm after step c).

7. A process for working up particulate polymers, comprising the steps of:
i) providing a polymer solution comprising the polymer and a first organic solvent (S2),
ii) dropletizing the polymer solution into a precipitation bath comprising a second organic solvent (S3) and water to obtain the particulate polymer by precipitation,
iii) removing the precipitated particulate polymer from the precipitation bath,
iv) extracting residues of the first and/or second organic solvent (S2; S3) from the particulate polymer with an extractant,
v) drying the particulate polymer with the process according to any of claims 1 to 6 and
vi) optionally finishing the particulate polymer.

8. The process according to claim 7, wherein the first and/or second organic solvent (S2; S3) is N-methylpyrrolidone.

9. The process according to any of claims 1 to 8, wherein the particulate polymer is a polyethersulfone.

## Revendications

1. Procédé de séchage de polymères particulaires, comprenant les étapes suivantes :
a) le chargement d'un polymère particulaire, qui contient 60 % en poids à 90 % en poids d'un solvant (L1), par rapport au poids total du polymère particulaire et du solvant (L1),
b) le pré-séchage mécanique du polymère particulaire à 20 % en poids à 50 % en poids du solvant (L1), par rapport au poids total du polymère particulaire et du solvant (L1), le pré-séchage mécanique à l'étape b) étant réalisé dans une presse à cylindres, et
c) le séchage final du polymère particulaire à 0 % en poids à 15 % en poids du solvant (L1), par rapport au poids total du polymère particulaire et du solvant (L1), le polymère particulaire étant un polymère qui contient des unités de répétition de formule I, II et/ou III

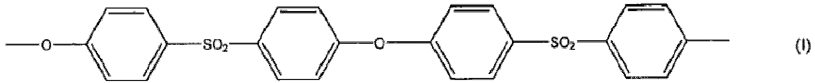

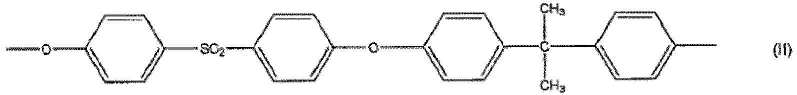

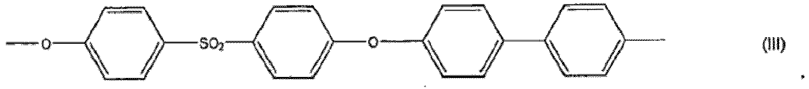

2. Procédé selon la revendication 1, dans lequel le séchage final à l'étape c) est réalisé avec un séchoir à lit fluidisé.

3. Procédé selon l'une quelconque des revendications 1 ou 2, dans lequel le solvant (L1) est l'eau.

4. Procédé selon l'une quelconque des revendications 1 à 3, dans lequel le polymère particulaire présente à l'étape a) une taille de particule de 0,5 mm à 7 mm.

5. Procédé selon l'une quelconque des revendications 1 à 4, dans lequel le polymère particulaire pré-séché mécaniquement est broyé après l'étape b) et avant l'étape c).

6. Procédé selon l'une quelconque des revendications 1 à 5, dans lequel le polymère particulaire présente après l'étape c) une taille de particule de 0,5 mm à 7 mm.

7. Procédé de traitement de polymères particulaires, comprenant les étapes suivantes :
i) la préparation d'une solution de polymère, qui contient le polymère et un premier solvant organique (L2),
ii) la mise en gouttes de la solution de polymère dans un bain de précipitation, qui contient un deuxième solvant organique (L3) et de l'eau, afin d'obtenir le polymère particulaire par précipitation,
iii) la séparation du polymère particulaire précipité du bain de précipitation,
iv) l'extraction de résidus du premier et/ou du deuxième solvant organique (L2 ; L3) du polymère particulaire avec un agent d'extraction,
v) le séchage du polymère particulaire avec le procédé selon l'une quelconque des revendications 1 à 6, et
vi) éventuellement le conditionnement du polymère particulaire.

8. Procédé selon la revendication 7, dans lequel le premier et/ou le deuxième solvant organique (L2 ; L3) sont la N-méthylpyrrolidone.

9. Procédé selon l'une quelconque des revendications 1 à 8, dans lequel le polymère particulaire est une polyéther-sulfone.
